# EUROPÄISCHE PATENTANMELDUNG

(11) **EP 1 855 213 A1**
(43) Veröffentlichungstag der Anmeldung: **14.11.2007**
(21) Anmeldenummer: 07006786.3
(22) Anmeldetag: 31.03.2007
(51) Int. Cl.: G06F 17/30

(54) **System und Verfahren zur automatisierten Übernahme und Bewertung der Qualität von Massendaten eines technischen Prozesses oder eines technischen Projektes**

(30) Priorität: 08.05.2006 DE 10621543
(71) Anmelder: ABB Technology AG, 8050 Zurich (CH)
(72) Erfinder: Beer, Peter, Dipl.-Ing., 68307 Mannheim (DE); Liefeldt, Andreas, Dipl.-Ing., 44532 Lünen (DE)
(74) Vertreter: Miller, Toivo

(57) **Zusammenfassung**

Die Erfindung betrifft ein System und ein Verfahren zur automatisierten Übernahme und nachfolgenden Bewertung der Qualität von Massendaten eines technischen Prozesses oder eines technischen Projektes in einer standardisierten Umgebung (70) eines oder mehrerer Datenverarbeitungsgeräte mit einem Zuordnungsmodul (20) zur Zuweisung der Massendaten aus einer oder mehrerer Datenquellen (10) zu Strukturelementen in der standardisierten Umgebung des Datenverarbeitungsgerätes (70) und zur Erzeugung einer definierten Abbildung der einzulesenden Massendaten. Das Zuordnungsmodul (20) wirkt mit einem Einlesemodul (30) zusammen, in welches die Massendaten gemäß der getroffenen Zuordnung automatisiert einlesbar sind. Die eingelesenen Daten sind einem Prüfmodul (40) zur automatisierten Prüfung und/oder zur Erzeugung eines Berichtes zur Bewertung der Qualität der eingelesenen Messdaten zuführbar. Die vom Prüfmodul (40) erzeugten Ergebnisse der Prüfung sind einem Verarbeitungsmodul (60) zur automatisierten Protokollierung in vordefinierte Strukturen zuführbar sind und die Ergebnisse der Prüfung sind in die standardisierte Umgebung (70) des Datenverarbeitungsgerätes übertragbar.

## Beschreibung

Die Erfindung betrifft ein System und ein Verfahren zur automatisierten Übernahme und Bewertung der Qualität von beliebig gekennzeichneten und strukturierten Massendaten eines technischen Prozesses oder eines technischen Projektes in eine standardisierte Umgebung eines oder mehrerer Datenverarbeitungsgeräte. Die Erfindung findet insbesondere Verwendung in der in der Anlagentechnik, Leittechnik und Verfahrensplanung.

Verfahren zum automatisierten Einlesen von Massendaten in Datenverarbeitungsgeräte existieren bereits, wobei jedoch eine automatisierte Bewertung der Qualität dieser Daten, welche insbesondere die Vollständigkeit, das Berücksichtigen von Änderungen sowie das Erkennen von Fehlern beim Einlesen der Daten betrifft, mit einer gazielten Rückmeldung an einen Benutzer nicht durchgeführt wird. Weiterhin existieren auch keine Verfahren zur Rückmeldung der Qualität der eingelesenen Daten an einen Benutzer in einer bestimmten Form, die beispielsweise durch ein gleiches Format und/oder eine gleiche Sortierung wie die importierten Daten gekennzeichnet sind. Somit ist es einem Benutzer bisher nicht möglich, durch einen direkten Vergleich von einzulesenden Daten und entsprechenden Rückmeldungen die Qualität der eingelesenen Daten zu bewerten und/ oder entsprechende Aktionen hieraus abzuleiten.

Gegenwärtig vergleicht ein Benutzer zur Beurteilung der Qualität der automatisiert eingelesenen Massendaten diese eingelesenen Daten in dem ihnen zugrunde liegenden Originalformat, beispielsweise einer Liste, mit den über ein Ausgabegerät des Datenverarbeitungsgeräts dargestellten Daten einzeln und manuell.

Die sich durch den manuellen Vergleich von einzulesenden und eingelesenen Massendaten ergebenden Nachteile beruhen auf einem unverhältnismäßig hohen Zeitaufwand. Die Zeitdauer für diesen Vergleich lässt sich darüber hinaus nur sehr unpräzise abschätzen, hängt aber proportional mit der Anzahl der eingelesenen Massendaten zusammen.

Auch ist der zu treibende Aufwand, bedingt durch den manuellen Vergleich jedes eingelesenen Massendatums mit dem Ursprungsdatum, als sehr hoch einzustufen und ist ebenfalls proportional zur Anzahl der eingelesenen Massendaten. Durch diese, von einem oder mehreren Benutzern durchzuführende, manuelle Vergleichstätigkeit kommt es sehr häufig zu Fehlern, die darüber hinaus nicht ohne weiteres reproduzierbar sind. Durch die diesem Vergleich im Allgemeinen zugrunde liegende nicht standardisierte Darstellungsform der Massendaten ist eine Kommunikation mit dem und/oder den Lieferanten dieser Daten erschwert und kann wiederum zu einer erhöhten Zeitdauer und/oder einem erhöhtem Aufwand in der Projektplanung und/oder -abwicklung führen.

Da eine Bewertung der Massendaten erst nach dem Vorgang des Einlesens durchgeführt werden kann, können bereits existierende Datenbestände des technischen Prozesses überschrieben, gelöscht und/oder verändert werden, ohne dass dies vom Benutzer geplant bzw. beabsichtigt ist.

Ausgehend von den beschriebenen Nachteilen liegt der Erfindung die Aufgabe zugrunde, ein System und ein Verfahren zur automatisierten Übernahme und nachfolgenden Bewertung der Qualität von beliebig gekennzeichneten und strukturierten Massendaten eines technischen Prozesses oder eines technischen Projektes in eine standardisierte Umgebung eines oder mehrerer Datenverarbeitungsgeräte anzugeben, wodurch vorgenannte Nachteile des Standes der Technik überwunden werden.

Diese Aufgabe wird erfindungsgemäß durch ein System der eingangs genannten Art mit den im Anspruch 1 angegebenen Merkmalen gelöst. Vorteilhafte Ausgestaltungen und Verbesserungen des erfindungsgemäßen Systems sowie ein Verfahren zur Ausführung des Systems sind in weiteren Ansprüchen und in der Beschreibung angegeben.

Das erfindungsgemäße System zur automatisierten Übernahme und nachfolgenden Bewertung der Qualität von beliebig gekennzeichneten und strukturierten Massendaten eines technischen Prozesses oder eines technischen Projektes in eine standardisierte Umgebung eines oder mehrerer Datenverarbeitungsgeräte umfasst ein Zuordnungsmodul zur Zuweisung der Massendaten aus einer oder mehrerer Datenquellen zu Strukturetementen in der standardisierten Umgebung des Datenverarbeitungsgerätes. Weiterhin erzeugt das Zuordnungsmodul eine definierte Abbildung der einzulesenden Massendaten.

Das Zuordnungsmodul wirkt mit einem Einlesemodul zusammen, welches die Massendaten gemäß der getroffenen Zuordnung automatisiert einliest und einem Prüfmodul zur automatisierten Prüfung und zur Erzeugung und/oder Visualisierung eines Berichtes zuführt, welcher die Qualität der eingelesenen Massedaten bewertet. Diese Bewertung bezieht sich beispielsweise die Korrektheit, die Vollständigkeit, die Konsistenz, die Gültigkeit, die Anwendbarkeit der Merkmale, die Kennzeichen und/oder Wertebereiche der Massendaten.

Das Prüfmodul wirkt mit einem Speichermodul zusammen, welches die Ergebnisse der Prüfung in der standardisierten Umgebung des Datenverarbeitungsgerätes und/oder in einer externen Datei speichert. Ein mit dem Speichermodul zusammenwirkendes Verarbeitungsmodul führt eine automatisierte Protokollierung der Ergebnisse der Prüfung in vordefinierte Strukturen durch und übernimmt die Ergebnisse der Prüfung in die standardisierte Umgebung des Datenverarbeitungsgerätes.

Mit dem erfindungsgemäßen System wird somit in vorteilhafter Weise die Qualität der eingelesenen Massendaten bewertet und dem Anwender zurückgemeldet.

In einer vorteilhaften Ausführungsform des erfindungsgemäßen Systems ist vorgesehen, beispielsweise die Korrektheit, die Vollständigkeit, die Konsistenz, die Gültigkeit, die Anwendbarkeit bestimmter Merkmale, die Kennzeichen und/oder Wertebereiche der Massendaten mittels eines Anzeigemoduls darzustellen und/oder für eine Weiterverarbeitung bereitzustellen.

Das Verfahren zur automatisierten Übernahme und nachfolgenden Bewertung der Qualität von Massendaten eines technischen Prozesses oder eines technischen Projektes in eine standardisierte Umgebung eines oder mehrerer Datenverarbeitungsgeräte mit dem die Aufgabe weiterhin gelöst wird, ist dem Anspruch 9 zu entnehmen.

Das erfindungsgemäße Verfahren beruht darauf, dass beliebig gekennzeichnete und strukturierte Massendaten in eine standardisierte Umgebung eines Datenverarbeitungssystems automatisiert und/oder unterstützt eingelesen werden. Die Qualität der eingelesenen Massendaten wird bewertet und dem Anwender zurückgemeldet.

Dazu werden in einem ersten Schritt die Massendaten von einer oder mehreren Datenquellen einem Zuordnungsmodul übertragen. Mittels des Zuordnungsmoduls werden Massedaten aus der Datenquelle Strukturelemente in der standardisierten Umgebung des Datenverarbeitungsgerätes zugewiesen und eine definierte Abbildung der einzulesenden Massendaten erzeugt.

In einem weiteren Schritt werden die Massendaten gemäß der getroffenen Zuordnung mittels des Zuordnungsmoduls automatisiert in ein Einlesemodul eingelesen und nachfolgend einem Prüfmodul zur automatisierten Prüfung und zur Erzeugung eines Berichtes, welcher die Qualität der eingelesenen Massendaten bewertet, zuführt.

Mittels eines Speichermoduls werden in einem nächsten Schritt ausgewählte Ergebnisse der Prüfung in der standardisierten Umgebung des Datenverarbeitungsgerätes und/oder in einer externen Datei gespeichert.

In einem nachfolgenden Schritt wird mittels eines Verarbeitungsmoduls eine automatisierte Protokollierung der ausgewählten Ergebnisse der Prüfung in vordefinierte Strukturen durchgeführt und die Ergebnisse der Prüfung werden in einem letzten Schritt in die standardisierte Umgebung des Datenverarbeitungsgerätes übernommen.

Das erfindungsgemäße Verfahren und System zum automatisierten Einlesen von Massendaten in ein oder mehrere Datenverarbeitungsgeräte umfasst in vorteilhafter Weise eine automatische Visualisierung der Korrektheit, der Vollständigkeit, der Konsistenz, der Gültigkeit, der Anwendbarkeit bestimmter Merkmale, der Kennzeichen und/oder der Wertebereiche der Massendaten.

Weiterhin sind mit dem erfindungsgemäßen System und Verfahren syntaktische, semantische, formelle, inhaltliche Fehler, und/oder andere Mängel der eingelesenen Massendaten erkennbar, auswertbar und/oder visuell darstellbar, wobei diese Hinweise und Auswertungen sowohl im Detail als auch als verdichtete Information dargestellt werden. Diese Darstellungen erfüllen somit den Zweck einer Qualitätsaussage über die eingelesenen Massendaten.

Die Vorteile des beschriebenen Verfahrens beruhen in einer vereinfachten Kommunikation mit dem und/oder den Lieferanten sowie der Verarbeitung und/oder Interpretation der eingelesenen bzw. einzulesenden Massendaten. Das erfindungsgemäße Verfahren unterstützt beispielsweise die Übernahme von Informationen und Vorgaben der Verfahrenslieferanten.

Weiterhin sind Aussagen bezüglich der Qualität und/oder Quantität der importierten Massendaten möglich, wodurch gegebenenfalls notwendige Aktionen, wie beispielsweise eine Korrektur von Daten, nach dem Einlesen der Massendaten leichter, mit weniger Aufwand identifizierbar, planbar und/ oder durchführbar sind. Des Weiteren erlaubt das beschriebene Verfahren eine Archivierung und/oder Historienbildung der während der Prüfung ermittelten Ergebnisse der eingelesenen Massendaten. Hierdurch wird in vorteilhafter Weise ebenfalls eine Nachverfolgbarkeit von Änderungen der zu verschiedenen Zeitpunkten einzulesenden bzw. eingelesenen Massendaten möglich.

Durch das Verfahren ist eine vereinfachte Fehlererkennung und/oder Fehlerbeseitigung durch die Identifizierung fehlerhafter und/oder fehlender Massendaten ermöglicht. Bei erneuten Einlesevorgängen der Massendaten zu späteren Zeitpunkten, sind mit dem erfindungsgemäßen Verfahren automatisiert Hinweise auf Änderungen zwischen zuvor eingelesenen Massendaten und den aktuell einzulesenden Massendaten und/oder den aktuell eingelesenen Datensätzen durchführbar.

Auch ist es mit dem erfindungsgemäßen Verfahren möglich, eine Auskunft über Massendaten zu erhalten, die in früheren Einlesevorgängen noch nicht eingelesen worden waren und zum aktuellen Zeitpunkt des Einlesens unbekannt sind.

Da die Massendaten erst dann in die standardisierte Umgebung eines oder mehrerer Datenverarbeitungsgeräte übernommen werden, wenn eine Bewertung der oben beschriebenen Qualität der eingelesenen Massendaten durchgeführt wurde, wird der ursprüngliche Datenbestand im dieser standardisierten Umgebung nur gezielt und reproduzierbar verändert.

Das erfindungsgemäße System und Verfahren sind vorzugsweise zum Einlesen von Daten bei Projekten und/oder Prozessen des Ingenieurwesens, beispielsweise in der Anlagentechnik, Leittechnik, Verfahrensplanung vorgesehen, wobei die Massendaten dieser Prozesse oder Projekte vorzugsweise Prozess- und Verfahrensdaten sind, die in Form von Verbraucherlisten und/oder Instrumentierungslisten bereitgestellt werden. Prinzipiell kann das erfindungsgemäße System und Verfahren in allen Sachgebieten angewendet werden, in denen ein automatisiertes Einlesen von Massendaten möglich und eine Rückmeldung über die Qualität der eingelesenen Daten erwünscht und erforderlich ist.

Das erfindungsgemäße System und Verfahren werden vorzugsweise in der Verfahrens-, Anlagen- oder Leittechnik-Planung eingesetzt. Finden aber auch Anwendung in der technischen Planung, wie beispielsweise der Verfahrenstechnik, der Anlagentechnik, dem Anlagenbau, der Automatisierungstechnik, der Elektrotechnik und der Verkabelung.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

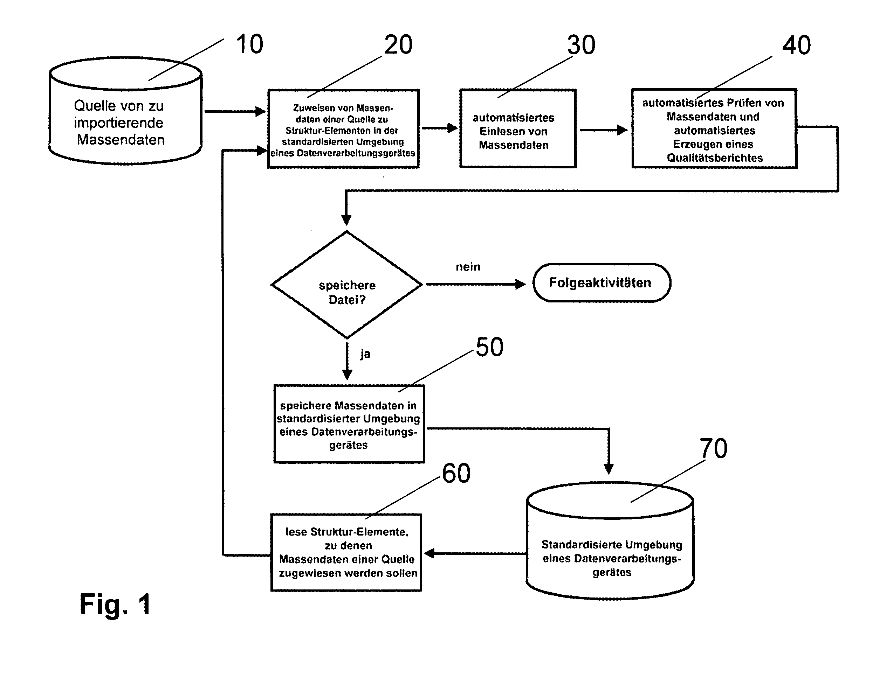

Die einzige Fig. 1 zeigt ein beispielhaftes Verfahren zur automatisierten Übernahme und nachfolgenden Bewertung der Qualität von beliebig gekennzeichneten und strukturierten Massendaten in eine standardisierte Umgebung 70 eines Datenverarbeitungsgerätes, wobei die Massendaten von einer Datenquelle 10 einem Zuordnungsmodul 20 bereitstellt werden. Mittels des Zuordnungsmoduls 20 werden die Massendaten aus der Datenquelle 10 Strukturelementen in der standardisierten Umgebung 70 des Datenverarbeitungsgerätes zugewiesen und es wird eine definierte Abbildung der einzulesenden Massendaten erzeugt. Die Massendaten werden gemäß der getroffenen Zuordnung mittels des Zuordnungsmoduls 20 automatisiert in ein Einlesemodul 30 übertragen und einem Prüfmodul 40 zur automatisierten Prüfung und zur Erzeugung eines Qualitätsberichtes zuführt. Der Qualitätsbericht ist beispielsweise eine Liste, die anzeigt, welche Daten nicht erfasst wurden.

Ausgewählte Ergebnisse der Prüfung in der standardisierten Umgebung 70 des Datenverarbeitungsgerätes werden mittels eines Speichermoduls gespeichert. Mittels eines Verarbeitungsmoduls 60 wird eine automatisierte Protokollierung der ausgewählten Ergebnisse der Prüfung in vordefinierte Strukturen durchgeführt und die Ergebnisse der Prüfung werden in die standardisierte Umgebung 70 des Datenverarbeitungsgerätes übernommen.

Nachfolgend sind beispielhaft die Verfahrensschritte des erfindungsgemäßen Verfahrens dargestellt.

In einem ersten Schritt wird jeweils mittels des Zuordnungsmoduls 20 eine Zuordnung von einem zu lesenden Massendatum zum Datum im Verfahren und/oder für jedes erstmalig einzulesende Massendatum genau einmal manuell durchgeführt.

Hierdurch wird eine definierte Abbildung von den einzulesenden Massendaten zum Verfahren und/oder System erzielt, mit dem die Massendaten eingelesen werden.

In einem folgenden Schritt werden die Massendaten gemäß der getroffenen Zuordnung mittels des Einlesemoduls 30 automatisiert eingelesen. Die sich anschließende Prüfung jedes eingelesenen Massendatums mittels des Prüfmoduls 40 ist abhängig vom jeweiligen technischen Prozess oder Projekt. Kriterien für Prüfungen sind beispielsweise die Länge von Zeichenketten, die Auswertung von regulären Ausdrücken, wie beispielsweise dem Kraftwerkskennzeichnungssystem, eine Übereinstimmung mit möglichen Einträgen von Datenbeständen des Zielsystems und/ oder Vollständigkeit, beispielsweise Pflichteinträge, der Massedaten.

Nach dem Einlesen und der Prüfungen der Massendaten im Einlese- bzw. Prüfmodul 30, 40 weist jedes Massendatum genau einen der folgenden neun Zustände auf:
- Massendatum ist neu im Vergleich zu vorherigen Einlesevorgängen Massendatum wurde
   - eingelesen mit Fehler(n) (Zustand 1)
   - eingelesen ohne Fehler (Zustand 2)
- Massendatum ist vorhanden, aber in einem oder mehreren Merkmalen verändert im Vergleich zu vorherigen Einlesevorgängen Massendatum wurde
   - eingelesen mit Fehler(n) (Zustand 3)
   - eingelesen ohne Fehler (Zustand 4)
- Massendatum ist nach dem aktuellen Einlesevorgang nicht mehr vorhanden, d. h. es wurde im Vergleich zu vorherigen Einlesevorgängen gelöscht Massendatum wurde
   - eingelesen mit Fehler(n) (Zustand 5)
   - eingelesen ohne Fehler (Zustand 6)
- Massendatum ist nach dem aktuellen Einlesevorgang identisch Vergleich zu vorherigen Einlesevorgängen Massendatum wurde
   - eingelesen mit Fehler(n) (Zustand 7)
   - eingelesen ohne Fehler (Zustand 8)
- Massendatum konnte im aktuellen Einlesevorgang nicht eingelesen werden. Eine Aussage über eine Veränderung im Vergleich zu vorherigen Einlesevorgängen ist nicht möglich (Zustand 9)

Die Zustände, also Ergebnisse der Prüfungen, werden für jedes geprüfte Massendatum und/oder eine Aggregation von geprüften Massendaten visualisiert, beispielsweise durch eine eindeutige Zuordnung von Farben, Symbolen, Mustern und/oder oder anderen Differenzierungsmerkmalen. Die Ergebnisse dieser Prüfungen werden intern, d. h. in der standardisierten Umgebung des Datenverarbeitungsgeräts, und/oder extern in einer Datei, beispielsweise im HTML, XML, ASCII- Format, gespeichert.

In einem nächsten Schritt erfolgt eine automatisierte Protokollierung in vordefinierter Struktur, die Aussagen bezüglich der Existenz, der Vollständigkeit, der Sinnhaltigkeit, der Gültigkeit und/oder der Veränderung der importierten Massendaten enthält. Diese Struktur kann identisch zur Struktur der einzulesenden Daten oder neu definiert sein.

Erst in einem letzten Schritt werden diejenigen Daten in die standardisierte Umgebung des Datenverarbeitungsgerätes übernommen, die auf Grundlage der vom beschriebenen Verfahren kommunizierten Zustände auswählt wurden.

Insgesamt erfordert das beschriebene Verfahren die Pflege von Metriken zur Beurteilung der Qualität der eingelesenen Massendaten. Da die Metriken von der Art der einzulesenden Massendaten bzw. in den jeweiligen technischen Projekten und Prozessen variieren, wird für jeden zu betrachtenden technischen Prozess bzw. jedes Projekt ein neuer Satz von Metriken erstellt und gepflegt.

## Patentansprüche

1. System zur automatisierten Übernahme und nachfolgenden Bewertung der Qualität von Massendaten eines technischen Prozesses oder eines technischen Projektes in eine standardisierte Umgebung (70) eines oder mehrerer Datenverarbeitungsgeräte wobei
- ein Zuordnungsmodul (20) zur Zuweisung der Massendaten aus einer oder mehrerer Datenquellen (10) zu Strukturelementen in der standardisierten Umgebung des Datenverarbeitungsgerätes (70) und zur Erzeugung einer definierten Abbildung der einzulesenden Massendaten vorgesehen ist,
- das Zuordnungsmodul (20) mit einem Einlesemodul (30) zusammenwirkt, in welches die Massendaten gemäß der getroffenen Zuordnung automatisiert einlesbar sind,
- die eingelesenen Daten einem Prüfmodul (40) zur automatisierten Prüfung und/oder zur Erzeugung eines Berichtes zur Bewertung der Qualität der eingelesenen Messdaten zuführbar sind,
- die vom Prüfmodul (40) erzeugten Ergebnisse der Prüfung einem Verarbeitungsmodul (60) zur automatisierten Protokollierung in vordefinierte Strukturen zuführbar sind und die Ergebnisse der Prüfung in die standardisierte Umgebung (70) des Datenverarbeitungsgerätes übertragbar sind.

2. System nach Anspruch 1, **dadurch gekennzeichnet, dass** die Massendaten beliebig gekennzeichnete und strukturierte Massedaten sind.

3. System nach Anspruch 2, **dadurch gekennzeichnet, dass** ein Anzeigemodul vorgesehen ist, welches die Ergebnisse der Prüfung visualisiert und/oder für eine Weiterverarbeitung bereitstellt.

4. System nach einem der vorherigen Ansprüche, **dadurch gekennzeichnet, dass** die vom Prüfmodul (40) bereitgestellten Ergebnisse der Prüfung intern in der standardisierten Umgebung des Datenverarbeitungsgerätes und/oder auf einem externen Speichermedium als Datei speicherbar sind.

5. System nach einem der vorherigen Ansprüche, **dadurch gekennzeichnet, dass** die automatisierte Protokollierung in den vordefinierten Strukturen Aussagen bezüglich der Existenz, der Vollständigkeit, der Sinnhaltigkeit, der Gültigkeit, der Veränderung der importierten Massendaten enthält.

6. System nach einem der vorherigen Ansprüche, **dadurch gekennzeichnet, dass** die vordefinierten Strukturen identisch zur Struktur der einzulesenden Daten sind.

7. System nach einem der Ansprüche 1 bis 5, **dadurch gekennzeichnet, dass** die vordefinierten Strukturen neu definierbar sind.

8. System nach einem der vorherigen Ansprüche, **dadurch gekennzeichnet, dass** das Prüfungsmodul (40) die Zulässigkeit des Datentyps, die Zulässigkeit der Länge von Zeichenketten, die Auswertung von regulären Ausdrücken, die Übereinstimmung mit möglichen Einträgen von Datenbeständen eines Zielsystems und/oder die Vollständigkeit der Massedaten prüft.

9. Verfahren zur automatisierten Übernahme und nachfolgenden Bewertung der Qualität von Massendaten eines technischen Prozesses oder eines technischen Projektes in eine standardisierte Umgebung (70) eines oder mehrerer Datenverarbeitungsgeräte wobei,
- mittels eines Zuordnungsmoduls (20) die Massendaten aus einer oder mehreren Datenquellen (10) Strukturelementen in der standardisierten Umgebung (70) des Datenverarbeitungsgerätes zugewiesen werden und eine definierte Abbildung der einzulesenden Massendaten erzeugt wird,
- die Massendaten gemäß der getroffenen Zuordnung mittels des Zuordnungsmoduls (20) automatisiert in ein Einlesemodul (30) eingelesen werden und einem Prüfmodul (40) zur automatisierten Prüfung und/oder zur Erzeugung eines Berichtes zur Bewertung der Qualität der eingelesenen Messwerte zuführt werden,
- mittels eines Verarbeitungsmoduls (60) eine automatisierte Protokollierung der Ergebnisse der Prüfung in vordefinierte Strukturen durchgeführt wird und die Ergebnisse der Prüfung in die standardisierte Umgebung (70) des Datenverarbeitungsgerätes übernommen werden.

10. Verfahren nach Anspruch 9, **dadurch gekennzeichnet, dass** die Ergebnisse der Prüfung mittels eines Speichermoduls gespeichert werden und/oder mittels eines Anzeigemoduls visualisiert und/oder für eine Weiterverarbeitung bereitgestellt werden.

11. Verfahren nach einem der Ansprüche 9 oder 10, **dadurch gekennzeichnet, dass** die vom Prüfmodul (40) bereitgestellten Ergebnisse der Prüfung intern in der standardisierten Umgebung des Datenverarbeitungsgerätes und/oder auf einem externen Speichermedium als Datei gespeichert werden.

12. System nach einem der vorherigen Ansprüche, **dadurch gekennzeichnet, dass** mittels des Prüfungsmoduls (40) die Zulässigkeit des Datentyps, die Zulässigkeit der Länge von Zeichenketten, die Auswertung von regulären Ausdrücken, die Übereinstimmung mit möglichen Einträgen von Datenbeständen eines Zielsystems und/oder die Vollständigkeit der Massedaten geprüft werden.

13. Verwendung des Systems und Verfahrens nach einem der vorherigen Ansprüche in der technischen Planung, insbesondere der Verfahrenstechnik, der Anlagentechnik, dem Anlagenbau, der Automatisierungstechnik, der Elektrotechnik oder der Verkabelung.
